# EUROPEAN PATENT SPECIFICATION

(11) **EP 3 440 338 B1**
(45) Date of publication and mention of the grant of the patent: **17.03.2021**
(21) Application number: 16717671.8
(22) Date of filing: 06.04.2016
(51) Int. Cl.: F02M 63/02, F02M 25/022, F02B 47/02

(54) **INJECTION SYSTEM AND METHOD FOR INJECTING SUPPLEMENTARY LIQUID INTO CYLINDERS OF PISTON ENGINE**
EINSPRITZSYSTEM UND VERFAHREN ZUM EINSPRITZEN ZUSÄTZLICHER FLÜSSIGKEIT IN ZYLINDER EINES KOLBENMOTORS
SYSTÈME D'INJECTION ET PROCÉDÉ D'INJECTION DE LIQUIDE SUPPLÉMENTAIRE DANS DES CYLINDRES DE MOTEUR À PISTONS

(43) Date of publication of application: 13.02.2019
(73) Proprietor: Wärtsilä Finland Oy, 65100 Vaasa (FI)
(72) Inventor: NARIMANZADEH, Armin, 65100 Vaasa (FI); VUOHIJOKI, Antti, 65100 Vaasa (FI); NISULA, Matti, 65100 Vaasa (FI)
(74) Representative: Berggren Oy, Helsinki & Oulu
(86) International application number: PCT/FI2016/050212
(87) International publication number: WO 2017/174855

(56) References cited:
- EP-A1- 2 541 018
- WO-A1-03/076794
- WO-A1-2016/024038
- DE-C1- 19 712 135
- JP-A- 2003 247 437
- US-A1- 2008 097 679
- US-B1- 6 273 032

## Description

### Technical field of the invention

The present invention relates to a supplementary liquid injection system for injecting non-combustible liquid into cylinders of a multi-cylinder piston engine in accordance with claim 1. The invention also concerns a method for injecting supplementary liquid into cylinders of a piston engine as defined in the other independent claim.

### Background of the invention

As the emission standards set more and more stringent requirements for the harmful nitrogen oxide (NOₓ), carbon monoxide (CO), volatile hydrocarbon (HC), particulate matter (PM) and other emissions of internal combustion engines, engine manufacturers have to find new ways to meet the requirements. At the same time, fuel efficiency of engines should be improved to reduce carbon dioxide (CO₂) emissions and ensure economical operation of engines.

In general, NOₓ emissions can be reduced by reducing the temperature in the combustion chamber. One way to do this is to apply water injection. Water can be injected directly into the combustion chamber or into the intake manifold to lower the temperature in the combustion chamber and thus reduce NOₓ emissions. The advantage of direct water injection into the cylinders is that a smaller amount of water is needed in comparison to water injection into the intake manifold. On the other hand, the direct water injection has a drawback that the water injector needs to be placed in the harsh conditions of the cylinder. The water injection is usually used only in certain operating conditions. When the water injection is in use, the water that flows through the water injectors works as a cooling medium and reduces the temperature of the water injectors. When the water injection is not in use, this cooling effect is not available and the temperature of the water injectors easily rises to a level causing hot corrosion. On the other hand, when the water injection is in use, water flowing through the water injectors can lower the temperature of the water injectors even too much, which makes the water injectors subject to cold corrosion. Cold corrosion refers to a phenomenon, where sulfuric acid condensates on a surface and deteriorates it. The water injectors may thus be subject to both hot and cold corrosion.

In publication WO 2016/024038 A1 is disclosed a fuel injection valve arrangement for internal combustion engine, comprising a fuel injector body, a nozzle needle arranged longitudinally movably in a first end of the fuel injector body and surrounded at least partially by a needle chamber, which fuel injection valve arrangement further comprises a flow fuse valve unit having an inlet in flow communication with a high-pressure accumulator and an outlet in flow communication with the needle chamber. Further in the publication is disclosed that the flow fuse valve and the injector and the accumulator are integral or that the flow fuse valve and the injector and the accumulator are separate or that the flow fuse is integral with the injector but the accumulator is separate or that the flow fuse is integral with the accumulator but the injector is separate.

### Summary of the invention

An object of the present invention is to provide an improved supplementary liquid injection system for injecting non-combustible liquid into cylinders of a multi-cylinder piston engine. The characterizing features of the injection system according to the invention are given in claim 1. Another object of the invention is to provide an improved method for injecting supplementary liquid into cylinders of a piston engine. The characterizing features of the method are given in the other independent claim.

The injection system according to the invention comprises a pump for pressurizing the liquid, an accumulator for receiving pressurized liquid from the pump, and an injector that is connected to the accumulator and configured to inject the liquid into a cylinder of the engine.

The method according to the invention comprises the steps of raising the pressure of the liquid by means of a pump, introducing the liquid from the pump into at least one accumulator, and supplying the liquid from the accumulator to at least one injector that is configured to inject the liquid into a cylinder of the engine.

According to an embodiment of the invention, a flow fuse is arranged between the injector and the accumulator. The flow fuse can be integrated with the accumulator. The flow fuse prevents flow to a faulty injector.

According to an embodiment of the invention, the injection system comprises an own accumulator for each injector of the injection system. Several accumulators can be served by a single pump.

According to an embodiment of the invention, each accumulator is arranged in the proximity of the respective injector. The accumulators can be attached to cylinder heads of the engine. By arranging the accumulators close to the injectors, pressure pulses in the injection system can be dampened.

According to an embodiment of the invention, the pump is a high-pressure pump configured to raise the pressure of the liquid to a level of at least 500 bar. The pump can be configured to raise the pressure of the liquid to the range of 600-1000 bar. With the high injection pressure, smaller nozzle hole size can be used and better atomization and mixing in the combustion chamber can be achieved. The injection system can comprise an additional pump, which is configured to supply supplementary liquid to the pump.

According to the invention, the temperature of the injected liquid is configured to be in the range of 80-99 °C when received by the injectors. With that temperature range, cold corrosion of the injectors can be prevented. In case of water injection, boiling of the water can be avoided. For heating the supplementary liquid, the injection system comprises heating means.

According to an embodiment of the invention, the injection system comprises an electronic control unit for controlling the injectors. The injectors can be controlled with solenoids or piezo actuators. This allows easy and individual control of the injectors. The injection timing and duration can thus be optimized.

According to an embodiment of the invention, the injection system is configured to inject water.

A multi-cylinder piston engine according to the invention comprises an injection system defined above.

### Brief description of the drawings

Embodiments of the invention are described below in more detail with reference to the accompanying drawings, in which
Fig. 1 shows schematically a supplementary liquid injection system of a piston engine, and
Fig. 2 shows schematically a more detailed view of part of the injection system of figure 1.

### Description of embodiments of the invention

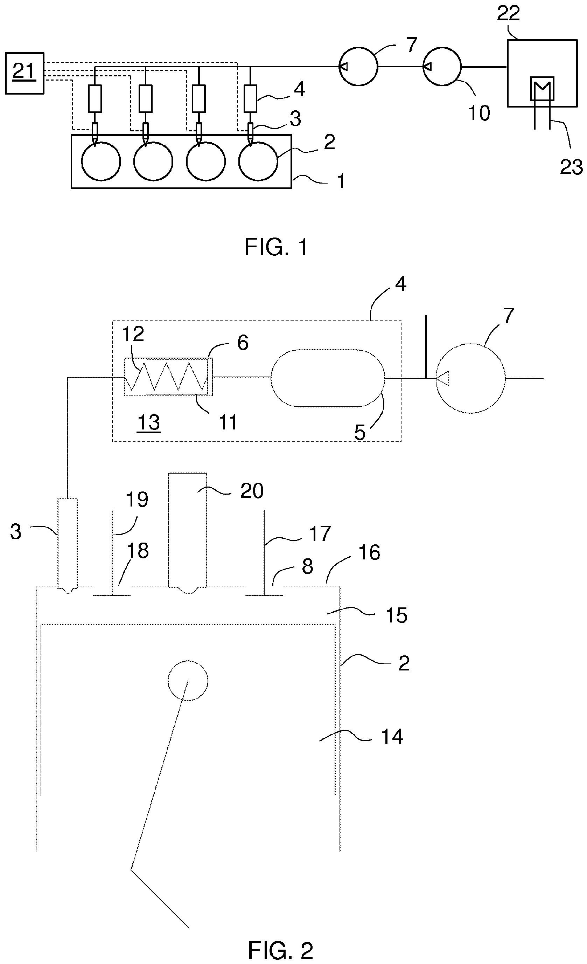

In figure 1 is shown schematically a piston engine 1. The engine 1 is a large internal combustion engine, such as a main or an auxiliary engine of a ship or an engine that is used at a power plant for producing electricity. The cylinder bore of the engine 1 is at least 150 mm. The rated power of the engine 1 is at least 100 kW/cylinder. The engine 1 comprises a plurality of cylinders 2. In figure 1, four cylinders 2 are shown, but the engine 1 can comprise any reasonable number of cylinders 2, which can be arranged, for instance, in line or in a V-configuration. The engine 1 can be, for instance, a compression ignition engine that is operated using liquid fuel, an Otto-engine that is operated using gaseous fuel, or a dual-fuel or multi-fuel engine that can be operated using two or more alternative fuels. The liquid fuel can be, for instance, light fuel oil or heavy fuel oil. The gaseous fuel can be, for instance, natural gas. A dual-fuel or multi-fuel engine can function in a compression ignition mode or in an Otto-cycle mode depending on the fuel that is used in each situation. If the engine 1 is operated according to the Otto-cycle, main fuel of the engine 1 can be ignited by spark plugs or with the aid of pilot fuel injection. The engine 1 can comprise one or more fuel injection systems (not shown). For instance, the engine 1 can comprise a fuel injection system for liquid main fuel. The fuel injection system can comprise a fuel injector for each cylinder 2 of the engine 1. The fuel injectors can be configured to inject the fuel directly into the cylinders 2 of the engine 1 or into prechambers. The fuel injection system for liquid main fuel can be a common rail system or it can be provided with an individual fuel injection pump for each cylinder 2 of the engine 1. The engine 1 can comprise an additional fuel injection system for introducing gaseous fuel into the cylinders 2 of the engine 1. The gaseous fuel can be introduced into the intake duct of the engine 1 and further into the cylinders 2 via intake ports. In case the engine 1 is a gas-engine operated using gaseous main fuel or a dual-fuel or multi-fuel engine that can be operated in a gas mode, the engine 1 can be provided with a pilot fuel system for injecting liquid pilot fuel into the cylinders 2 of the engine 1. The pilot fuel injection system can be a common rail system. The engine 1 could also comprise two fuel injection systems for alternative liquid main fuels.

Figure 2 shows schematically one cylinder 2 of the piston engine 1 of figure 1. A piston 14 moves in a reciprocating manner in the cylinder 2 between bottom dead center and top dead center. A cylinder head 16 closes the top dead center end, i.e. the upper end of the cylinder 2. The piston 14 delimits together with the cylinder head 16 and the walls of the cylinder 2 a combustion chamber 15, in which the combustion of the fuel takes place. Intake air, and possibly also fuel is introduced into the cylinder 2 via an intake port 8. An intake valve 17 is arranged to open and close fluid communication between the combustion chamber 15 and an intake duct. Exhaust gas is discharged from the cylinder 2 via an exhaust port 18. Fluid communication between the combustion chamber 15 and an exhaust duct can be opened and closed by an exhaust valve 19. In the embodiment of figure 2, the cylinder 2 is provided with a fuel injector 20, which can be used for injecting liquid fuel directly into the combustion chamber 15.

In addition to the one or more fuel injection systems of the engine 1, the engine 1 comprises a supplementary liquid injection system for injecting non-combustible liquid into the cylinders 2 of the engine 1. The non-combustible liquid can be water or water containing additives. The liquid can be, for instance, distilled water or tap water. The liquid is injected directly into the cylinders 2 of the engine 1, and the purpose of the injection is to reduce temperature in the combustion chamber 15 and thus reduce NOₓ emissions of the engine 1. In an Otto-cycle operation, the liquid injection can be used for reducing knocking risk. The injection system comprises at least one pump 7 for pressurizing the liquid. The pump 7 is configured to raise the pressure of the liquid from a first pressure level to a second pressure level. The pump 7 is a high-pressure pump, which is capable of raising the pressure of the liquid to a level of at least 500 bar. Preferably the pressure after the high-pressure pump 7 is in the range of 600-1000 bar. Because of the high pressure, smaller injector nozzle holes can be used and better atomization of the injected liquid is achieved. Better mixing of the injected liquid and the mixture in the combustion chamber 15 can thus be achieved. In the embodiment of figure 1, the injection system comprises also a low-pressure pump 10, which supplies the liquid from a tank 22 to the high-pressure pump 7. The low-pressure pump 10 is configured to feed the high-pressure pump 7 with liquid at the first pressure level. The pressure after the low-pressure pump 10 can be, for instance, in the range of 5-15 bar. In the embodiment of figure 1, the high-pressure pump 7 supplies liquid to all the cylinders 2 of the engine 1. However, the injection system could also be provided with two or more high-pressure pumps 7. It is advantageous that one high-pressure pump 7 supplies liquid to at least two cylinders 2 of the engine 1. The injection system could also comprise several low-pressure pumps 10, although a single low-pressure pump 10 can supply liquid to several high-pressure pumps 7. The low-pressure pump 10 is not a necessary component of the system, but the system would also work without the low-pressure pump 10. However, it is advantageous to have a small over pressure on the low-pressure side of the high-pressure pump 7 in order to avoid cavitation. This could be achieved by locating a supplementary liquid source, such as the tank 22 above the high-pressure pump 7 for gravity feed of the liquid. The low-pressure pump 10 could also be a transfer pump supplying the liquid from the tank 22 at a pressure lower than 5 bar.

The pressurized liquid from the high-pressure pump 7 is supplied to injectors 3. Each cylinder 2 of the engine 1 is provided with an own injector 3. In the embodiment of figure 2, the injector 3 is arranged in the cylinder head 16. The injector 3 is arranged at the side of the combustion chamber 15. The injectors 3 are separate from the fuel injectors 20. The injectors 3 can be individually controlled, for instance electrically. The injectors 3 can be controlled for example by solenoids or piezo actuators. The solenoids or piezo actuators can actuate the injectors 3 directly, or they can be used for controlling flow of a control fluid, which is used for actuating the injectors 3. The injectors 3 and/or actuators are connected to a control unit 21, which controls the opening and closing of the injectors 3.The injection timing and duration of the supplementary liquid in each cylinder 2 can thus be individually adjusted. The injection system is further provided with at least one accumulator 5. The accumulator 5 is a reservoir that is configured to contain a predetermined amount of liquid under pressure. In the embodiment of the figures, each cylinder 2 of the engine 1 is provided with an own accumulator 5. The accumulator 5 receives pressurized liquid from the high-pressure pump 7. The pressurized liquid is supplied from the accumulator 5 to the injector 3. The volume of each accumulator 5 is 10-200 times the amount of the liquid that is injected into the cylinder 2 through the injector 3 during one injection event at full load of the engine 1.

A flow fuse 6 is arranged between each injector 3 and accumulator 5. The flow fuse 6 prevents an uncontrolled leakage to the combustion chamber 15 of the cylinder 2. The flow fuse 6, also called as a flow limiting valve, is a device that is designed to be triggered in certain predetermined conditions to prevent flow through it. The flow fuse 6 is used for preventing flow from the accumulator 5 to the injector 3 for example in the case the valve needle of the injector 3 is stuck in an open position or some other failure, such as cracking of the injector or a nozzle body or meltdown or corrosion of a nozzle tip causes leaking of the supplementary liquid. The flow fuse 6 thus functions as a safety device that prevents leakage through a malfunctioning injector 3.

The flow fuse 6 comprises a piston 11 and a spring 12. The piston 11 is arranged inside a body 13 of the flow fuse 6 and can move in the longitudinal direction of the flow fuse 6. The spring 12 is arranged to push the piston 11 towards a first end of the flow fuse 6. When the injector 3 is in the closed position, the piston 11 is at the first end of the flow fuse 6, i.e. at a resting position. When the injector 3 opens, a pressure difference over the piston 11 is created and the pressure in the accumulator 5 pushes the piston 11 against the spring force and moves the piston 11 towards a second end of the flow fuse 6. Intermediate positions of the piston 11 between the first end and the second end of the flow fuse 6 are open positions, in which flow from the accumulator 5 towards the injector 3 is allowed. When the valve needle of the injector 3 returns to the closed position, the pressure difference over the piston 11 disappears and the spring 12 pushes the piston 11 again towards the first end of the flow fuse 6 and the piston 11 returns to the resting position. During each injection cycle, the piston 11 thus moves towards the second end of the flow fuse 6 and returns back to the initial position at the first end of the flow fuse 6.

If the injector 3 is not closed properly, a pressure difference over the piston 11 remains. The piston 11 thus keeps moving towards the second end of the flow fuse 6 until it reaches the second end, i.e. a closed position and closes the fluid communication between the accumulator 5 and the injector 3. The pressure of the accumulator 5 keeps the piston 11 in this position and prevents flow to the malfunctioning injector 3. During normal injection, the piston 11 does not move the full distance against the second end of the flow fuse 6, but the flow fuse 6 is configured so that the injection is terminated before the piston 11 has moved the full stroke from the resting position to the closed position, in which flow to the injector 3 is blocked. The piston 11 has a clearance, through which the flow is permitted for example when the piston 11 is at half-way of the stroke but not permitted when the piston 11 is at the closed position at the second end of the flow fuse 6. Alternatively, the piston 11 could be provided with a channel for allowing flow through the flow fuse 6 in intermediate positions of the piston 11. The flow fuse 6 can be configured to allow a small flow to the injector 3 even when the piston 11 of the flow fuse 6 is at the resting position. This allows the use of the supplementary liquid for temperature control of the injector 3. The liquid can thus be used for cooling or heating of the injector 3, depending on the temperature of the liquid and the injector 3.

In the embodiment of the figures, the accumulator 5 and the flow fuse 6 are integrated. Together they form an accumulator unit 4, which thus comprises the accumulator 5 and the flow fuse 6. The accumulator unit 4 can be arranged in the proximity of the cylinder 2. For instance, the accumulator unit 4 can be attached to the cylinder head 16. By locating the accumulator 5 close to the fuel injector 3, pressure pulses in the liquid injection system can be dampened.

The temperature of the liquid in the liquid injection system is configured to be in the range of 80-99 °C. This helps preventing cold corrosion of the injectors 3. If the temperature of the liquid is too low, the liquid flowing through the injectors 3 can lower the temperature of the injectors 3 too much, which makes the injectors 3 subject to cold corrosion. Cold corrosion refers to a phenomenon, where sulfuric acid condensates on a surface and deteriorates it. The temperature of the liquid should, however, be below 100 °C to avoid boiling. The liquid can be heated in the tank 22. For heating the liquid, the injection system is provided with heating means, which can be, for instance, a heat exchanger 23 located in the tank 22 or an electric heater. By locating the heating means in the tank 22, stable temperature of the supplementary liquid can be achieved and the heating means can be arranged in a low pressure part of the injection system.

## Claims

1. A supplementary liquid injection system for injecting non-combustible liquid into cylinders (2) of a multi-cylinder piston engine (1), the injection system comprising a pump (7) for pressurizing the liquid, an accumulator (5) for receiving pressurized liquid from the pump (7), and an injector (3) that is connected to the accumulator (5) and configured to inject the liquid into a cylinder (2) of the engine (1), wherein a flow fuse (6) is arranged between the injector (3) and the accumulator (5), the flow fuse (6) comprising a body (13), a piston (11) arranged inside the body (13) and a spring (12) pushing the piston (11) towards a first end of the flow fuse (6) to a resting position, wherein a pressure difference over the piston (11) is configured to move the piston (11) via intermediate open positions towards a second end of the flow fuse (6) towards a closed position, **characterized in that** the system comprises heating means (23) for heating the supplementary liquid and that the temperature of the injected liquid is configured to be in the range of 80-99 °C when received by the injectors (3).

2. An injection system according to claim 1, wherein the flow fuse (6) is integrated with the accumulator (5).

3. An injection system according to claim 1 or 2, wherein the injection system comprises an own accumulator (5) for each injector (3) of the injection system.

4. An injection system according to claim 3, wherein each accumulator (5) is arranged in the proximity of the respective injector (3).

5. An injection system according to claim 3 or 4, wherein each accumulator (5) is attached to a cylinder head (16).

6. An injection system according to any of the preceding claims, wherein the pump (7) is a high-pressure pump configured to raise the pressure of the liquid to a level of at least 500 bar.

7. An injection system according to any of the preceding claims, wherein the pump (7) is configured to raise the pressure of the liquid to the range of 600-1000 bar.

8. An injection system according to any of the preceding claims, wherein the system comprises an additional pump (10) that is configured to supply supplementary liquid to the pump (7).

9. An injection system according to any of the preceding claims, wherein the injection system comprises an electronic control unit (21) for controlling the injectors (3).

10. An injection system according to any of the preceding claims, wherein the injectors (3) are controlled with solenoids or piezo actuators.

11. An injection system according to any of the preceding claims, wherein the injection system is configured to inject water.

12. A multi-cylinder piston engine (1) comprising an injection system according to any of the preceding claims.

13. A method for injecting supplementary liquid into cylinders (2) of a piston engine (1), the method comprising the steps of raising the pressure of the liquid by means of a pump (7), introducing the liquid from the pump (7) into at least one accumulator (5), and supplying the liquid from the accumulator (5) through a flow fuse (6) to at least one injector (3) that is configured to inject the liquid into a cylinder (2) of the engine (1), the flow fuse (6) comprising a body (13), a piston (11) arranged inside the body (13) and a spring (12) pushing the piston (11) towards a first end of the flow fuse (6) to a resting position, wherein a pressure difference over the piston (11) is configured to move the piston (11) via intermediate open positions towards a second end of the flow fuse (6) towards a closed position, **characterized in that** the temperature of the injected liquid is configured to be in the range of 80-99 °C when received by the injectors (3).

## Patentansprüche

1. Zusatzflüssigkeitseinspritzsystem zum Einspritzen von nicht brennbarer Flüssigkeit in den Zylindern (2) eines Mehrzylinderkolbenmotors (1), wobei das Einspritzsystem eine Pumpe (7) zum Druckbeaufschlagen der Flüssigkeit, einen Speicher (5) zum Aufnehmen von Druckflüssigkeit von der Pumpe (7) und einen Injektor (3) umfasst, der mit dem Speicher (5) verbunden und konfiguriert ist, um die Flüssigkeit in einen Zylinder (2) des Motors (1) einzuspritzen, wobei eine Durchflusssicherung (6) zwischen dem Injektor (3) und dem Speicher (5) angeordnet ist, wobei die Durchflusssicherung (6) einen Körper (13), einen im Körper (13) angeordneten Kolben (11) und eine Feder (12) umfasst, die den Kolben (11) in Richtung eines ersten Endes der Durchflusssicherung (6) zu einer Ruheposition drückt, wobei eine Druckdifferenz über dem Kolben (11) konfiguriert ist, um den Kolben (11) über offene Zwischenpositionen in Richtung eines zweiten Endes der Durchflusssicherung (6) in Richtung einer geschlossenen Position zu bewegen, **dadurch gekennzeichnet, dass** das System Heizmittel (23) zum Erhitzen der Zusatzflüssigkeit umfasst, und dass die Temperatur der eingespritzten Flüssigkeit so konfiguriert ist, dass sie im Bereich von 80 bis 99 °C liegt, wenn sie von den Injektoren (3) empfangen wird.

2. Einspritzsystem nach Anspruch 1, wobei die Durchflusssicherung (6) in den Speicher (5) integriert ist.

3. Einspritzsystem nach Anspruch 1 oder 2, wobei das Einspritzsystem einen eigenen Speicher (5) für jeden Injektor (3) des Einspritzsystems umfasst.

4. Einspritzsystem nach Anspruch 3, wobei jeder Speicher (5) in der Nähe des jeweiligen Injektors (3) angeordnet ist.

5. Einspritzsystem nach Anspruch 3 oder 4, wobei jeder Speicher (5) an einem Zylinderkopf (16) angebracht ist.

6. Einspritzsystem nach einem der vorhergehenden Ansprüche, wobei die Pumpe (7) eine Hochdruckpumpe ist, die konfiguriert ist, um den Druck der Flüssigkeit auf ein Niveau von mindestens 500 bar zu erhöhen.

7. Einspritzsystem nach einem der vorhergehenden Ansprüche, wobei die Pumpe (7) konfiguriert ist, um den Druck der Flüssigkeit auf den Bereich von 600-1000 bar zu erhöhen.

8. Einspritzsystem nach einem der vorhergehenden Ansprüche, wobei das System eine zusätzliche Pumpe (10) umfasst, die konfiguriert ist, um der Pumpe (7) Zusatzflüssigkeit zuzuführen.

9. Einspritzsystem nach einem der vorhergehenden Ansprüche, wobei das Einspritzsystem eine elektronische Steuereinheit (21) zum Steuern der Injektoren (3) umfasst.

10. Einspritzsystem nach einem der vorhergehenden Ansprüche, wobei die Injektoren (3) mit Solenoiden oder Piezoaktoren gesteuert werden.

11. Einspritzsystem nach einem der vorhergehenden Ansprüche, wobei das Einspritzsystem zum Einspritzen von Wasser konfiguriert ist.

12. Mehrzylinderkolbenmotor (1) mit einem Einspritzsystem nach einem der vorhergehenden Ansprüche.

13. Verfahren zum Einspritzen von Zusatzflüssigkeit in den Zylindern (2) eines Kolbenmotors (1), wobei das Verfahren die folgenden Schritte umfasst: Erhöhen des Flüssigkeitsdrucks mittels einer Pumpe (7), Einbringen der Flüssigkeit von der Pumpe (7) in mindestens einen Speicher (5) und Zuführen der Flüssigkeit vom Speicher (5) durch eine Durchflusssicherung (6) zu mindestens einem Injektor (3), der konfiguriert ist, um die Flüssigkeit in einen Zylinder (2) des Motors (1) einzuspritzen, wobei die Durchflusssicherung (6) einen Körper (13), einen im Körper (13) angeordneten Kolben (11) und eine Feder (12) umfasst, die den Kolben (11) in Richtung eines ersten Endes der Durchflusssicherung (6) zu einer Ruheposition drückt, wobei eine Druckdifferenz über dem Kolben (11) konfiguriert ist, um den Kolben (11) über offene Zwischenpositionen in Richtung eines zweiten Endes der Durchflusssicherung (6) in Richtung einer geschlossenen Position zu bewegen, **dadurch gekennzeichnet, dass** die Temperatur der eingespritzten Flüssigkeit so konfiguriert ist, dass sie im Bereich von 80 bis 99 ° C liegt, wenn sie von den Injektoren (3) empfangen wird.

## Revendications

1. Système d'injection de liquide supplémentaire pour injecter un liquide non combustible dans des cylindres (2) d'un moteur à pistons multicylindres (1), le système d'injection comprenant une pompe (7) pour mettre le liquide sous pression, un accumulateur (5) pour recevoir un liquide sous pression depuis la pompe (7), et un injecteur (3) qui est relié à l'accumulateur (5) et configuré pour injecter le liquide dans un cylindre (2) du moteur (1), dans lequel un fusible de débit (6) est agencé entre l'injecteur (3) et l'accumulateur (5), le fusible de débit (6) comprenant un corps (13), un piston (11) agencé à l'intérieur du corps (13) et un ressort (12) poussant le piston (11) vers une première extrémité du fusible de débit (6) vers une position de repos, dans lequel une différence de pression sur le piston (11) est configurée pour déplacer le piston (11) via des positions ouvertes intermédiaires vers une seconde extrémité du fusible de débit (6) vers une position fermée, **caractérisé en ce que** le système comprend des moyens de chauffage (23) pour chauffer le liquide supplémentaire et **en ce que** la température du liquide injecté est configurée pour être dans la plage de 80 à 99 °C lorsqu'il est reçu par les injecteurs (3).

2. Système d'injection selon la revendication 1, dans lequel le fusible de débit (6) est intégré à l'accumulateur (5).

3. Système d'injection selon la revendication 1 ou 2, dans lequel le système d'injection comprend un accumulateur (5) propre pour chaque injecteur (3) du système d'injection.

4. Système d'injection selon la revendication 3, dans lequel chaque accumulateur (5) est agencé à proximité de l'injecteur (3) respectif.

5. Système d'injection selon la revendication 3 ou 4, dans lequel chaque accumulateur (5) est fixé à une culasse (16).

6. Système d'injection selon l'une quelconque des revendications précédentes, dans lequel la pompe (7) est une pompe haute pression configurée pour élever la pression du liquide à un niveau d'au moins 500 bars.

7. Système d'injection selon l'une quelconque des revendications précédentes, dans lequel la pompe (7) est configurée pour élever la pression du liquide dans la plage de 600 à 1 000 bars.

8. Système d'injection selon l'une quelconque des revendications précédentes, dans lequel le système comprend une pompe supplémentaire (10) qui est configurée pour fournir un liquide supplémentaire à la pompe (7).

9. Système d'injection selon l'une quelconque des revendications précédentes, dans lequel le système d'injection comprend une unité de commande électronique (21) pour commander les injecteurs (3).

10. Système d'injection selon l'une quelconque des revendications précédentes, dans lequel les injecteurs (3) sont commandés avec des solénoïdes ou des actionneurs piézoélectriques.

11. Système d'injection selon l'une quelconque des revendications précédentes, dans lequel le système d'injection est configuré pour injecter de l'eau.

12. Moteur à pistons multicylindres (1) comprenant un système d'injection selon l'une quelconque des revendications précédentes.

13. Procédé d'injection de liquide supplémentaire dans des cylindres (2) d'un moteur à pistons (1), le procédé comprenant les étapes d'élévation de la pression du liquide au moyen d'une pompe (7), d'introduction du liquide depuis la pompe (7) dans au moins un accumulateur (5), et de fourniture du liquide depuis l'accumulateur (5) à travers un fusible de débit (6) vers au moins un injecteur (3) qui est configuré pour injecter le liquide dans un cylindre (2) du moteur (1), le fusible de débit (6) comprenant un corps (13), un piston (11) agencé à l'intérieur du corps (13) et un ressort (12) poussant le piston (11) vers une première extrémité du fusible de débit (6) vers une position de repos, dans lequel une différence de pression sur le piston (11) est configurée pour déplacer le piston (11) via des positions ouvertes intermédiaires vers une seconde extrémité du fusible de débit (6) vers une position fermée, **caractérisé en ce que** la température du liquide injecté est configurée pour être dans la plage de 80 à 99 °C lorsqu'il est reçu par les injecteurs (3).
